# EUROPÄISCHE PATENTSCHRIFT

(11) **EP 3 807 695 B1**
(45) Veröffentlichungstag und Bekanntmachung des Hinweises auf die Patenterteilung: **24.04.2024**
(21) Anmeldenummer: 19731667.2
(22) Anmeldetag: 13.06.2019
(51) Int. Cl.: G02B 27/00, G02B 27/01

(54) **LICHTWELLENLEITER FÜR EIN ANZEIGEGERÄT**
OPTICAL WAVEGUIDE FOR A DISPLAY DEVICE
GUIDE OPTIQUE DESTINÉ À UN APPAREIL D'AFFICHAGE

(30) Priorität: 15.06.2018 DE 102018209622
(43) Veröffentlichungstag der Anmeldung: 21.04.2021
(73) Patentinhaber: Continental Automotive Technologies GmbH, 30175 Hannover (DE)
(72) Erfinder: KERN, Thorsten Alexander, 65824 Schwalbach a. Ts. (DE)
(74) Vertreter: Continental Corporation
(86) Internationale Anmeldenummer: PCT/EP2019/065498
(87) Internationale Veröffentlichungsnummer: WO 2019/238823

(56) Entgegenhaltungen:
- WO-A1-2017/060665
- DE-A1-102014 214 946
- DE-A1-102016 115 938
- US-A1- 2018 039 078

## Beschreibung

Die vorliegende Erfindung betrifft einen Lichtwellenleiter für ein Anzeigegerät sowie ein Gerät zum Generieren eines virtuellen Bildes, das einen solchen Lichtwellenleiter verwendet.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe des virtuellen Bildes herkömmlicher Head-Up-Displays wird durch die Größe der Optikeinheit begrenzt. Ein Ansatz zur Vergrößerung des virtuellen Bildes besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Der in der US 2016/0124223 A1 genutzte Lichtwellenleiter ist auf eine Lichtwellenlänge optimiert. Soll ein farbiges virtuelles Bild dargestellt werden, sind zwei oder mehr Teillichtwellenleiter vorzusehen, die jeweils wellenlängenoptimiert sind. Jeder Farbe ist dabei in der Regel ein Teillichtwellenleiter zugeordnet. Es können aber auch zwei Farben in einem Teillichtwellenleiter kombiniert transportiert werden. Die Teillichtwellenleiter werden durch Lichtquellen in der jeweiligen zugehörigen Farbe beleuchtet. Neben dem Nutzlicht werden bei Head-Up-Displays, die auf holographischen Lichtwellenleitern beruhen, auch der spekulare und der holographische Reflex der Sonne an den Glasplatten der jeweiligen Teillichtwellenleiter über die Spiegeleinheit zum Auge reflektiert. Dies führt in der Regel zumindest zu einer Beeinträchtigung der Bildwahrnehmung, häufig aber auch zu einer direkten, sicherheitsrelevanten Blendung des Nutzers des Systems.

WO2017060665 und DE102016115938 offenbaren Lichtwellenleiter zum Aufweiten einer Austrittspupille. US2018039078 und DE102014214946 offenbaren optische Filter.

Es ist eine Aufgabe der vorliegenden Erfindung, einen Lichtwellenleiter sowie ein Gerät zum Generieren eines virtuellen Bildes bereitzustellen, bei denen das Risiko einer Blendung durch Störlicht reduziert ist.

Diese Aufgabe wird durch einen Lichtwellenleiter mit den Merkmalen des Anspruchs 1 und durch ein Gerät zum Generieren eines virtuellen Bildes mit den Merkmalen des Anspruchs 9 gelöst. Bevorzugte Ausgestaltungen der Erfindung sind Gegenstand der abhängigen Ansprüche.

Gemäß einem ersten Aspekt der Erfindung umfasst ein Lichtwellenleiter für ein Anzeigegerät zwei oder mehr an unterschiedliche Wellenlängen angepasste Teillichtwellenleiter, wobei zumindest einer der Teillichtwellenleiter ein optisches Filter aufweist.

Gemäß einem weiteren Aspekt der Erfindung weist ein Gerät zum Generieren eines virtuellen Bildes auf:
- eine bildgebende Einheit zum Erzeugen eines Bildes;
- eine Optikeinheit zum Projizieren des Bildes auf eine Spiegeleinheit zum Generieren des virtuellen Bildes; und
- einen erfindungsgemäßen Lichtwellenleiter zum Aufweiten einer Austrittspupille.

Bei der Verwendung von Laserlicht werden lediglich sehr schmalbandige Spektren für die Stützwellenlängen der Lichtquellen genutzt. Durch die Verwendung eines geeigneten optischen Filters, das an die genutzten Wellenlängen angepasst ist, wird erreicht, dass nur diese schmalbandigen Wellenlängenbereiche des Störlichts bis zu den Teillichtwellenleitern vordringen können. Dies reduziert den Anteil des potentiell reflektierten Sonnenlichts deutlich, da lediglich diejenigen Bestandteile des Sonnenlichts, deren Wellenlängen im Transmissionsbereich des optischen Filters liegen, in die Teillichtwellenleiter eindringen können. Somit wird eine Reduktion des Rückreflexes auf das Minimum der in Transmission notwendigen Transparenz des optischen Filters erzielt.

Der erfindungsgemäße Lichtwellenleiter ermöglicht es, Head-Up-Displays mit einer reduzierten Blendung durch Störlicht zu realisieren. Besonders vorteilhaft ist die Verwendung daher bei Head-Up-Displays, die in einer Umgebung genutzt werden, bei der die Möglichkeit der Einkopplung von Sonnenlicht in den Lichtwellenleiter besteht. Dies ist beispielsweise bei der Verwendung in einem Kraftfahrzeug der Fall.

Gemäß einem Aspekt der Erfindung ist das optische Filter ein dielektrisches Filter. Dielektrische Filter haben den Vorteil, dass sich die Transmissionseigenschaft sehr exakt einstellen lassen und sehr schmalbandige Transmissionsbänder realisiert werden können. Zugleich sind zahlreiche geeignete dielektrische Filter am Markt verfügbar, auf die ohne Entwicklungsaufwand zurückgegriffen werden kann.

Gemäß einem Aspekt der Erfindung weist der Lichtwellenleiter drei Teillichtwellenleiter für drei zugehörige Wellenlängen auf. Auf diese Weise kann der Lichtwellenleiter für die Anzeige mehrfarbiger virtueller Bilder genutzt werden. Beispielsweise können die Teillichtwellenleiter für die Farben Rot, Grün und Blau optimiert sein, mit denen sich vollfarbige Bilder darstellen lassen. Dem Fachmann sind weitere Farbkombinationen bekannt, mit denen sich vollfarbige Bilder realisieren lassen.

Gemäß einem Aspekt der Erfindung weist ein erster Teillichtwellenleiter ein optisches Filter auf, das für die drei Wellenlängen durchlässig ist. Ein zweiter Teillichtwellenleiter weist ein optisches Filter auf, das für zwei der drei Wellenlängen durchlässig ist. Ein dritter Teillichtwellenleiter weist schließlich ein optisches Filter auf, das für eine der drei Wellenlängen durchlässig ist. Gemäß dieser Ausführungsform ist je Teillichtwellenleiter ein optisches Filter vorhanden. Der aus Sicht der Störlichtquelle erste Teillichtwellenleiter hat auf der Oberseite ein erstes optisches Filter, das alle drei Farben durchlässt, während das zweite optische Filter des darauffolgenden Teillichtwellenleiters nur noch für zwei Farben durchlässig ist. Das dritte optische Filter des dritten Teillichtwellenleiters lässt nur noch eine Farbe passieren. Auf diese Weise lässt sich der Anteil des potentiell reflektierten Sonnenlichts weiter reduzieren.

Gemäß einem Aspekt der Erfindung sind die Teillichtwellenleiter flächig ausgebildet und bilden einen Stapel. Durch die flächige Ausführung der Teillichtwellenleiter kann der Lichtwellenleiter zum Aufweiten einer Austrittspupille in zwei Dimensionen genutzt werden. Die Integration der Teillichtwellenleiter in einen Stapel vereinfacht dabei die Handhabung und Justage während des Zusammenbaus eines Head-Up-Displays. Zugleich wird so eine größere Stabilität des Lichtwellenleiters erzielt, was insbesondere für Head-Up-Displays von Bedeutung ist, die äußeren Krafteinwirkungen ausgesetzt sind, beispielsweise durch Erschütterungen, die während der Fahrt in einem Kraftfahrzeug auftreten.

Gemäß einem Aspekt der Erfindung ist zumindest ein optisches Filter in den Stapel integriert. Durch die Integration des optischen Filters in den Stapel ist dieses in einem gewissen Umfang vor äußeren Einflüssen geschützt. Zudem kann bei dieser Ausführung der Lichtwellenleiter zusammen mit dem optischen Filter in einem einzigen Produktionsschritt im Head-Up-Display verbaut werden, wodurch die Produktionszeit reduziert wird.

Gemäß einem Aspekt der Erfindung ist das optische Filter auf eine Grenzfläche eines Teillichtwellenleiters aufgebracht. Auf diese Weise können weitere Reflektionen im Stapel vermieden werden und die Menge der vom Störlicht transportierten Energie, die auf die Summe aller Grenzflächen trifft, minimiert werden.

Gemäß einem Aspekt der Erfindung erfolgt das Aufbringen des optischen Filters auf eine Grenzfläche eines Teillichtwellenleiters durch Bedampfen oder Sputtern. Durch Bedampfen, d.h. durch das Aufdampfen von Schichten, lässt sich das gewünschte optische Filter sehr kostengünstig herstellen. Das Aufbringen des optischen Filters durch Sputtern, auch als Kathodenzerstäubung bezeichnet, ist zwar weniger kostengünstig, eignet sich aber besonders für aufwändige Filter mit hohen Anforderungen an die Genauigkeit.

Vorzugsweise wird ein erfindungsgemäßes Gerät zum Generieren eines virtuellen Bildes in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln. Selbstverständlich kann die erfindungsgemäße Lösung auch in anderen Umgebungen oder für andere Anwendungen genutzt werden, z.B. in Lastkraftwagen, in der Bahntechnik und im ÖPNV, bei Kranen und Baumaschinen, etc. Weitere Merkmale der vorliegenden Erfindung werden aus der nachfolgenden Beschreibung und den angehängten Ansprüchen in Verbindung mit den Figuren ersichtlich. Die Erfindung wird in den Ansprüchen definiert.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug;
- Fig. 5: illustriert den Einfall von Störlicht in einen erfindungsgemäßen Lichtwellenleiter mit einem optischen Filter;
- Fig. 6: zeigt schematisch die Transmissionskurve des optischen Filters aus Fig. 5;
- Fig. 7: illustriert den Einfall von Störlicht in einen erfindungsgemäßen Lichtwellenleiter mit drei optischen Filtern; und
- Fig. 8: zeigt schematisch die Transmissionskurven der optischen Filter aus Fig. 7.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

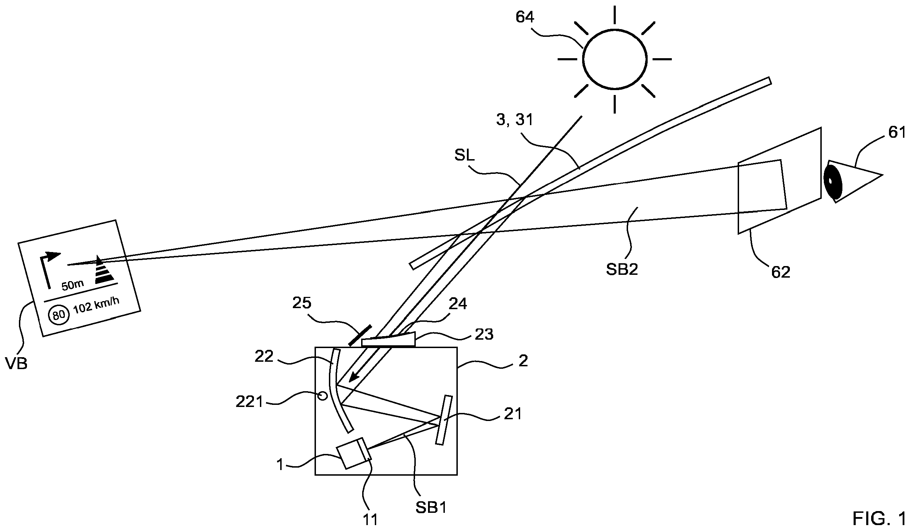

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepasst und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie bzw. ein Polarisator 24. Das Anzeigeelement 11 ist typischerweise polarisiert und die Spiegeleinheit 3 wirkt wie ein Analysator. Zweck des Polarisators 24 ist es daher, die Polarisation zu beeinflussen, um eine gleichmäßige Sichtbarkeit des Nutzlichts zu erzielen. Ein Blendschutz 25 dient dazu, das über die Grenzfläche der Abdeckung 23 reflektierte Licht sicher zu absorbieren, sodass keine Blendung des Betrachters hervorgerufen wird. Außer dem Sonnenlicht SL kann auch das Licht einer anderen Störlichtquelle 64 auf das Anzeigeelement 11 gelangen. In Kombination mit einem Polarisationsfilter kann der Polarisator 24 zusätzlich auch genutzt werden, um einfallendes Sonnenlicht SL auszublenden.

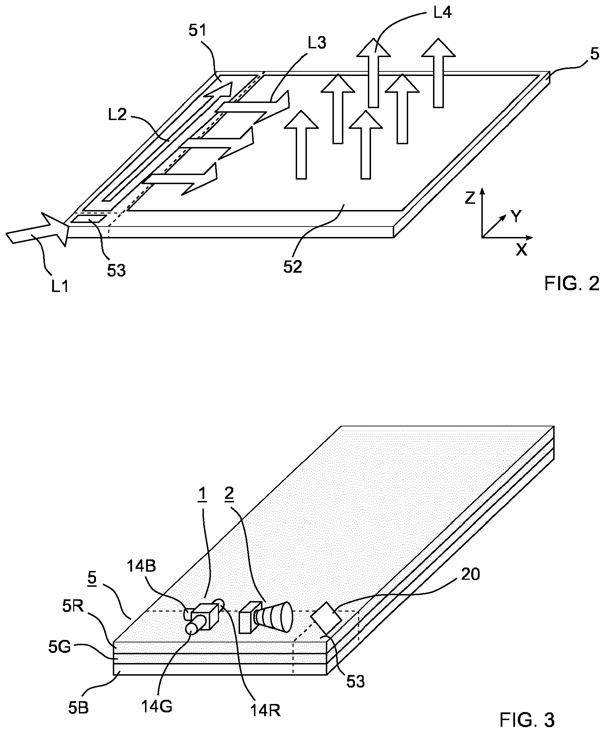

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

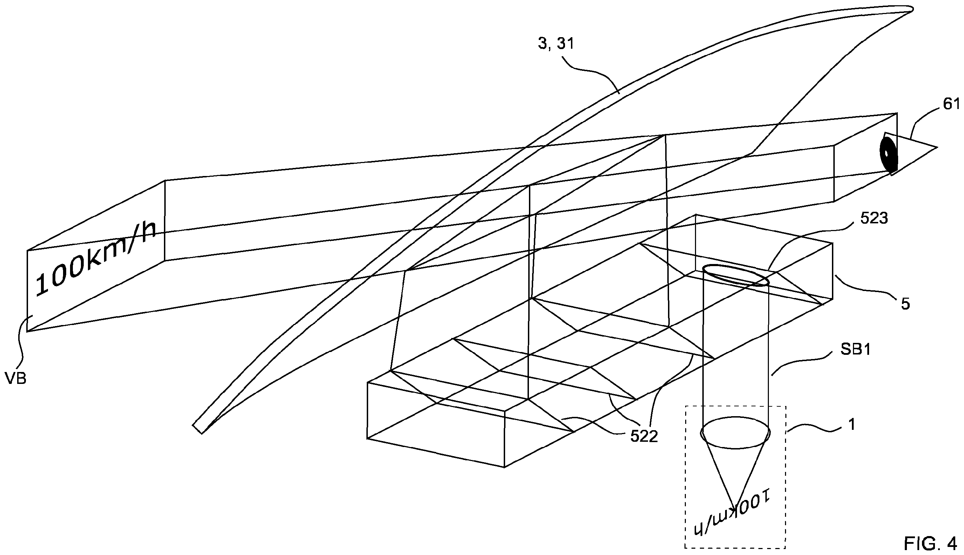

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug. Auch bei dieser Technologie ist die gesamte Optik in einem Gehäuse verbaut, dass von einer transparenten Abdeckung gegen die Umgebung abgegrenzt ist. Wie schon beim Head-Up-Display aus Fig. 1 kann auf dieser Abdeckung ein Retarder angeordnet sein.

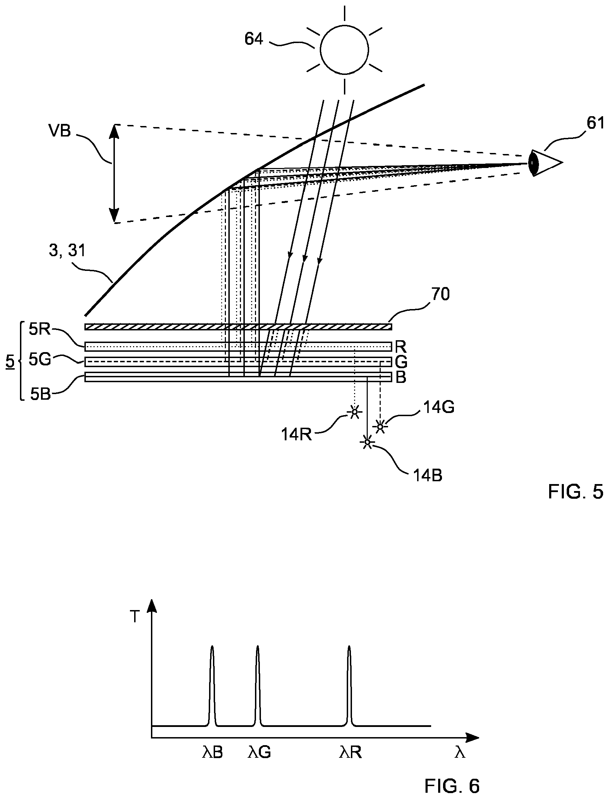

Fig. 5 illustriert den Einfall von Störlicht in einen erfindungsgemäßen Lichtwellenleiter 5 mit einem optischen Filter 70. Fig. 6 zeigt schematisch die Transmissionskurve des optischen Filters 70. Der Lichtwellenleiter 5 ist Bestandteil eines Gerätes zum Generieren eines virtuellen Bildes VB für einen Betrachter 61. In diesem Beispiel ist das Gerät ein Head-Up-Display eines Kraftfahrzeugs. Der Lichtwellenleiter 5 dient hier zum zweidimensionalen Aufweiten einer Austrittspupille. Als Spiegeleinheit 3 fungiert die Windschutzscheibe 31 des Kraftfahrzeugs. Störlichtquelle 64 ist hier die Sonne.

Der Lichtwellenleiter 5 hat im dargestellten Ausführungsbeispiel drei für unterschiedliche Wellenlängen AR, AG, AB optimierte Teillichtwellenleiter 5R, 5G, 5B. Vorzugsweise entsprechen die Wellenlängen den Farben Rot, Grün und Blau. Der in Fig. 5 oberste Teillichtwellenleiter 5R weist ein optisches Filter 70 auf, beispielsweise ein dielektrisches Filter. Wie der schematischen Transmissionskurve in Fig. 6 zu entnehmen ist, in der der Transmissionskoeffizient T gegen die Wellenlänge λ aufgetragen ist, weist das optische Filter 70 drei schmalbandige Transmissionsbänder auf, die den drei genutzten Wellenlängen AR, AG, AB entsprechen. Die Teillichtwellenleiter 5R, 5G, 5B werden durch Lichtquellen 14R, 14G, 14B beleuchtet, die jeweils die zugehörige Farbe emittieren. Bei der Verwendung von Laserlicht sind lediglich sehr schmalbandige Spektren für die Stützwellenlängen AR, AG, AB der Lichtquellen 14R, 14G, 14B vorhanden.

Neben dem Nutzlicht werden bei Head-Up-Displays, die auf holographischen Lichtwellenleitern 5 beruhen, auch der spekulare und der holographische Reflex der Sonne als Störlichtquelle 64 an den Glasplatten der jeweiligen Teillichtwellenleiter 5R, 5G, 5B über die Spiegeleinheit 3 zum Auge 61 reflektiert. Dies führt in der Regel zumindest zu einer Beeinträchtigung der Bildwahrnehmung, häufig aber auch zu einer direkten, sicherheitsrelevanten Blendung des Nutzers des Systems. Durch die Verwendung des optischen Filters 70 wird erreicht, dass nur die schmalbandigen Bereiche des Störlichts bis zu den Teillichtwellenleitern 5R, 5G, 5B vordringen können. Dies reduziert den Anteil des potentiell reflektierten Sonnenlichts erheblich.

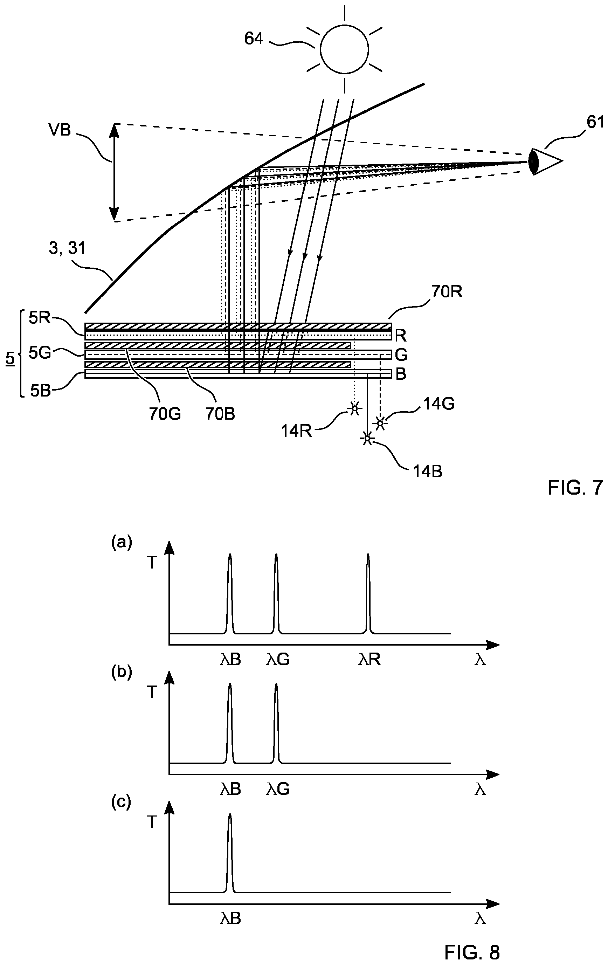

Fig. 7 illustriert den Einfall von Störlicht in einen erfindungsgemäßen Lichtwellenleiter 5 mit drei optischen Filtern 70R, 70G, 70B. Fig. 8 zeigt schematisch die Transmissionskurven der optischen Filter 70R, 70G, 70B. Dabei zeigt Teilbild (a) die Transmissionskurve des aus Sicht der Störlichtquelle 64 ersten optischen Filters 70R, Teilbild (b) die Transmissionskurve des zweiten optischen Filters 70G und Teilbild (c) die Transmissionskurve des dritten optischen Filters 70G. Wie schon in Fig. 6 ist in den Transmissionskurven der Transmissionskoeffizient T gegen die Wellenlänge λ aufgetragen.

Bei dieser Variante ist je Teillichtwellenleiter 5R, 5G, 5B ein optisches Filter 70R, 70G, 70B vorhanden. Der aus Sicht der Störlichtquelle 64 erste Teillichtwellenleiter 5R hat auf der Oberseite ein erstes optisches Filter 70R, das alle drei Farben durchlässt, während das zweite optische Filter 70G des darauffolgenden Teillichtwellenleiters 5G nur noch für zwei Farben durchlässig ist. Das dritte optische Filter 70B des dritten Teillichtwellenleiters 5B lässt nur noch eine Farbe passieren. Je nach Möglichkeit des Herstellungsprozesses können diese optischen Filter 70R, 70G, 70B auch direkt auf die Grenzflächen der Teillichtwellenleiter 5R, 5G, 5B aufgebracht werden, um weitere Reflektionen zu vermeiden und die Menge der Energie auf die Summe aller Grenzflächen zu minimieren.

### Bezugszeichenliste

- 1: Bildgenerator/Bildgebende Einheit
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie/Polarisator
- 25: Blendschutz

- 3: Spiegeleinheit
- 31: Windschutzscheibe

- 5, 5R, 5G, 5B: Lichtwellenleiter
- 51: Falthologramm
- 52: Auskoppelhologramm
- 522: Spiegelebene
- 523: Spiegelebene
- 53: Einkoppelhologramm
- 54: Substrat
- 55: Deckschicht
- 56: Hologrammschicht

- 61: Auge/Betrachter
- 62: Eyebox
- 64: Störlichtquelle

- 70, 70R, 70G, 70B: Optisches Filter

- L1...L4: Licht
- λ, λR, λG, λB: Wellenlänge

- S1: Empfangen eines anzuzeigenden Bildes
- S2: Bestimmen von Bereichen ohne darzustellende Bildinhalte
- S3: Schalten des Elektrodenarrays entsprechend der bestimmten Bereiche
- SB1, SB2: Strahlenbündel
- SL: Sonnenlicht
- T: Transmissionskoeffizient
- VB: Virtuelles Bild

## Patentansprüche

1. Lichtwellenleiter (5) zum Aufweiten einer Austrittspupille für ein Anzeigegerät, mit zwei oder mehr an unterschiedliche Wellenlängen angepassten Teillichtwellenleitern (5R, 5G, 5B) mit jeweils einem Einkoppelhologramm (53), einem Falthologramm (51) und einem Auskoppelhologramm (52), **dadurch gekennzeichnet, dass** zumindest einer der Teillichtwellenleiter (5R, 5G, 5B) auf einer Oberseite ein optisches Filter (70, 70R, 70G, 70B) zum Filtern von in den Lichtwellenleiter (5) einfallendem Störlicht einer Störlichtquelle (64) aufweist, das zumindest ein schmalbandiges Transmissionsband aufweist, das an ein Spektrum einer Lichtquelle (14R,14G,14B) des Anzeigegeräts angepasst ist.

2. Lichtwellenleiter (5) gemäß Anspruch 1, wobei das optische Filter (70, 70R, 70G, 70B) ein dielektrisches Filter ist.

3. Lichtwellenleiter (5) gemäß Anspruch 1 oder 2, wobei der Lichtwellenleiter (5) drei Teillichtwellenleiter (5R, 5G, 5B) für drei zugehörige Wellenlängen (λR, λG, λB) aufweist.

4. Lichtwellenleiter (5) gemäß Anspruch 3, wobei ein erster Teillichtwellenleiter (5R) ein optisches Filter (70R) aufweist, das für die drei Wellenlängen (λR, λG, λB) durchlässig ist, ein zweiter Teillichtwellenleiter (5G) ein optisches Filter (70G) aufweist, das für zwei der drei Wellenlängen (AG, AB) durchlässig ist, und ein dritter Teillichtwellenleiter (5B) ein optisches Filter (70B) aufweist, das für eine der drei Wellenlängen (λB) durchlässig ist.

5. Lichtwellenleiter (5) gemäß einem der vorherigen Ansprüche, wobei die Teillichtwellenleiter (5R, 5G, 5B) flächig ausgebildet sind und einen Stapel bilden.

6. Lichtwellenleiter (5) gemäß Anspruch 5, wobei zumindest ein optisches Filter (70, 70R, 70G, 70B) in den Stapel integriert ist.

7. Lichtwellenleiter (5) gemäß einem der vorherigen Ansprüche, wobei das optische Filter (70, 70R, 70G, 70B) auf eine Grenzfläche eines Teillichtwellenleiters (5R, 5G, 5B) aufgebracht ist.

8. Lichtwellenleiter (5) gemäß einem der vorherigen Ansprüche, wobei das Aufbringen des optischen Filters (70, 70R, 70G, 70B) auf eine Grenzfläche eines Teillichtwellenleiters (5R, 5G, 5B) durch Bedampfen oder Sputtern erfolgt.

9. Gerät zum Generieren eines virtuellen Bildes (VB), mit:
- einer bildgebenden Einheit (1) zum Erzeugen eines Bildes; und
- einer Optikeinheit (2) zum Projizieren des Bildes auf eine Spiegeleinheit (3) zum Generieren des virtuellen Bildes (VB) ;
**dadurch gekennzeichnet, dass** das Gerät zumindest einen Lichtwellenleiter (5) gemäß einem der Ansprüche 1 bis 8 zum Aufweiten einer Austrittspupille aufweist.

10. Fortbewegungsmittel mit einem Gerät gemäß Anspruch 9 zum Generieren eines virtuellen Bildes (VB) für einen Bediener des Fortbewegungsmittels.

## Claims

1. Optical waveguide (5) for expanding an exit pupil for a display device, having two or more partial optical waveguides (5R, 5G, 5B) adapted to different wavelengths, each having an input coupling hologram (53), a folding hologram (51) and an output coupling hologram (52), **characterized in that** at least one of the partial optical waveguides (5R, 5G, 5B) has on an upper side an optical filter (70, 70R, 70G, 70B) for filtering stray light that is incident in the optical waveguide (5) from a stray light source (64), with the filter having at least one narrowband transmission band that is adapted to a spectrum of a light source (14R, 14G, 14B) of the display device.

2. Optical waveguide (5) according to Claim 1, wherein the optical filter (70, 70R, 70G, 70B) is a dielectric filter.

3. Optical waveguide (5) according to Claim 1 or 2, wherein the optical waveguide (5) has three partial optical waveguides (5R, 5G, 5B) for three associated wavelengths (λR, λG, λB).

4. Optical waveguide (5) according to Claim 3, wherein a first partial optical waveguide (5R) has an optical filter (70R) that is transmissive to the three wavelengths (λR, λG, λB), a second partial optical waveguide (5G) has an optical filter (70G) that is transmissive to two of the three wavelengths (λG, λB), and a third partial optical waveguide (5B) has an optical filter (70B) that is transmissive to one of the three wavelengths (λB).

5. Optical waveguide (5) according to any of the preceding claims, wherein the partial optical waveguides (5R, 5G, 5B) have a two-dimensional design and form a stack.

6. Optical waveguide (5) according to Claim 5, wherein at least one optical filter (70, 70R, 70G, 70B) is integrated into the stack.

7. Optical waveguide (5) according to any of the preceding claims, wherein the optical filter (70, 70R, 70G, 70B) is applied onto an interface of a partial optical waveguide (5R, 5G, 5B).

8. Optical waveguide (5) according to any of the preceding claims, wherein the optical filter (70, 70R, 70G, 70B) is applied onto an interface of a partial optical waveguide (5R, 5G, 5B) by vapour deposition or sputtering.

9. Device for generating a virtual image (VB), having:
- a picture-generating unit (1) for generating an image;
and
- an optical unit (2) for projecting the image onto a mirror unit (3) for generating the virtual image (VB);
**characterized in that** the device has at least one optical waveguide (5) according to any of claims 1 to 8 for expanding an exit pupil.

10. Means of transport with a device according to Claim 9 for generating a virtual image (VB) for an operator of the means of transport.

## Revendications

1. Guide d'ondes optique (5) permettant d'élargir une pupille de sortie destinée à un appareil d'affichage, comprenant au moins deux guides d'ondes optiques partiels (5R, 5G, 5B) adaptés à des longueurs d'ondes différentes et présentant respectivement un hologramme de couplage (53), un hologramme de pliage (51) et un hologramme de découplage (52), **caractérisé en ce qu'**au moins l'un des guides d'ondes optiques partiels (5R, 5G, 5B) présente sur une face supérieure un filtre optique (70, 70R, 70G, 70B) destiné à filtrer une lumière parasite d'une source lumineuse parasite (64) incidente dans le guide d'ondes optique (5), qui présente au moins une bande de transmission à bande étroite adaptée à un spectre d'une source lumineuse (14R, 14G, 14B) de l'appareil d'affichage.

2. Guide d'ondes optique (5) selon la revendication 1, dans lequel le filtre optique (70, 70R, 70G, 70B) est un filtre diélectrique.

3. Guide d'ondes optique (5) selon la revendication 1 ou 2, dans lequel le guide d'ondes optique (5) présente trois sous-guides d'ondes optiques (5R, 5G, 5B) pour trois longueurs d'ondes (λR, λG, λB) associées.

4. Guide d'ondes optique (5) selon la revendication 3, dans lequel un premier guide d'ondes optique partiel (5R) présente un filtre optique (70R) qui est transparent aux trois longueurs d'ondes (λR, λG, λB), un deuxième guide d'ondes optique partiel (5G) présente un filtre optique (70G) qui est transparent à deux des trois longueurs d'onde (λG, λB), et un troisième guide d'ondes optique partiel (5B) présente un filtre optique (70B) qui est transparent à l'une des trois longueurs d'onde (λB).

5. Guide d'ondes optique (5) selon l'une quelconque des revendications précédentes, dans lequel les guides d'ondes optiques partiels (5R, 5G, 5B) sont réalisés en nappe et forment un empilement.

6. Guide d'ondes optique (5) selon la revendication 5, dans lequel le filtre optique (70, 70R, 70G, 70B) est intégré dans l'empilement.

7. Guide d'ondes optique (5) selon l'une quelconque des revendications précédentes, dans lequel le filtre optique (70, 70R, 70G, 70B) est appliqué sur une surface limite d'un guide d'ondes optique partiel (5R, 5G, 5B).

8. Guide d'ondes optique (5) selon l'une quelconque des revendications précédentes, dans lequel l'application du filtre optique (70, 70R, 70G, 70B) sur une surface limite d'un guide d'ondes optique partiel (5R, 5G, 5B) est effectuée par dépôt en phase vapeur ou par pulvérisation cathodique.

9. Appareil destiné à générer une image virtuelle (VB), comprenant :
- une unité de formation d'image (1) pour générer une image ;
et
- une unité optique (2) destinée à projeter l'image sur une unité à miroir (3) pour générer l'image virtuelle (VB) ;
**caractérisé en ce que** le dispositif présente au moins un guide d'ondes optique (5) selon l'une quelconque des revendications 1 à 8 pour élargir une pupille de sortie.

10. Moyen de locomotion comprenant un appareil selon la revendication 9 pour générer une image virtuelle (VB) destinée à un opérateur du moyen de locomotion.
